# EUROPÄISCHE PATENTSCHRIFT

(11) **EP 2 438 352 B1**
(45) Veröffentlichungstag und Bekanntmachung des Hinweises auf die Patenterteilung: **18.06.2014**
(21) Anmeldenummer: 10704530.4
(22) Anmeldetag: 04.02.2010
(51) Int. Cl.: F22B 33/00, F01K 23/10, F22B 21/02, F22B 29/06, F22B 37/74, F22B 1/18

(54) **DURCHLAUFVERDAMPFER**
ONCE-THROUGH EVAPORATOR
ÉVAPORATEUR CONTINU

(30) Priorität: 09.03.2009 DE 102009012320
(43) Veröffentlichungstag der Anmeldung: 11.04.2012
(73) Patentinhaber: Siemens Aktiengesellschaft, 80333 München (DE)
(72) Erfinder: BRÜCKNER, Jan, 91080 Uttenreuth (DE); FRANKE, Joachim, 90403 Nürnberg (DE); SCHLUND, Gerhard, 90425 Nürnberg (DE)
(86) Internationale Anmeldenummer: PCT/EP2010/051361
(87) Internationale Veröffentlichungsnummer: WO 2010/102864

(56) Entgegenhaltungen:
- DE-A1- 3 808 006
- DE-A1- 19 901 430
- FR-A- 1 324 002
- GB-A- 1 201 783
- US-A- 2 842 103
- US-B1- 6 957 630

## Beschreibung

Die Erfindung betrifft einen Durchlaufverdampfer für einen Abhitzedampferzeuger in liegender Bauweise mit einer ersten Verdampferheizfläche, die eine Anzahl von im Wesentlichen vertikal angeordneten, von unten nach oben durchströmten ersten Dampferzeugerrohren umfasst, und einer weiteren, der ersten Verdampferheizfläche strömungsmediumsseitig nachgeschalteten zweiten Verdampferheizfläche, die eine Anzahl von weiteren, im Wesentlichen vertikal angeordneten, von unten nach oben durchströmten zweiten Dampferzeugerrohren umfasst. Solche Durchlaufverdampfer sind beispielsweise aus der US 6,957,630 B1 bekannt.

Bei einer Gas- und Dampfturbinenanlage wird die im entspannten Arbeitsmittel oder Heizgas aus der Gasturbine enthaltene Wärme zur Erzeugung von Dampf für die Dampfturbine genutzt. Die Wärmeübertragung erfolgt in einem der Gasturbine nachgeschalteten Abhitzedampferzeuger, in dem üblicherweise eine Anzahl von Heizflächen zur Wasservorwärmung, zur Dampferzeugung und zur Dampfüberhitzung angeordnet ist. Die Heizflächen sind in den Wasser-Dampf-Kreislauf der Dampfturbine geschaltet. Der Wasser-Dampf-Kreislauf umfasst üblicherweise mehrere, z. B. drei, Druckstufen, wobei jede Druckstufe eine Verdampferheizfläche aufweisen kann.

Für den der Gasturbine als Abhitzedampferzeuger heizgasseitig nachgeschalteten Dampferzeuger kommen mehrere alternative Auslegungskonzepte, nämlich die Auslegung als Durchlaufdampferzeuger oder die Auslegung als Umlaufdampferzeuger, in Betracht. Bei einem Durchlaufdampferzeuger führt die Beheizung von als Verdampferrohren vorgesehenen Dampferzeugerrohren zu einer Verdampfung des Strömungsmediums in den Dampferzeugerrohren in einem einmaligen Durchlauf. Im Gegensatz dazu wird bei einem Natur- oder Zwangumlaufdampferzeuger das im Umlauf geführte Wasser beim Durchlauf durch die Verdampferrohre nur teilweise verdampft. Das dabei nicht verdampfte Wasser wird nach einer Abtrennung des erzeugten Dampfes für eine weitere Verdampfung denselben Verdampferrohren erneut zugeführt.

Ein Durchlaufdampferzeuger unterliegt im Gegensatz zu einem Natur- oder Zwangumlaufdampferzeuger keiner Druckbegrenzung. Ein hoher Frischdampfdruck begünstigt einen hohen thermischen Wirkungsgrad und somit niedrige CO2-Emissionen eines fossilbeheizten Kraftwerks. Zudem weist ein Durchlaufdampferzeuger im Vergleich zu einem Umlaufdampferzeuger eine einfache Bauweise auf und ist somit mit besonders geringem Aufwand herstellbar. Die Verwendung eines nach dem Durchlaufprinzip ausgelegten Dampferzeugers als Abhitzedampferzeuger einer Gas- und Dampfturbinenanlage ist daher zur Erzielung eines hohen Gesamtwirkungsgrades der Gas- und Dampfturbinenanlage bei einfacher Bauweise besonders günstig.

Ein als Abhitzedampferzeuger ausgelegter Durchlaufdampferzeuger kann grundsätzlich in einer von zwei alternativen Bauformen ausgeführt sein, nämlich in stehender Bauweise oder in liegender Bauweise. Ein Durchlaufdampferzeuger in liegender Bauweise ist dabei für eine Durchströmung des beheizenden Mediums oder Heizgases, beispielsweise des Abgases aus der Gasturbine, in annähernd horizontaler Richtung ausgelegt, wohingegen ein Durchlaufdampferzeuger in stehender Bauweise für eine Durchströmung des beheizenden Mediums in einer annähernd vertikalen Richtung ausgelegt ist.

Ein Durchlaufdampferzeuger in liegender Bauweise ist im Gegensatz zu einem Durchlaufdampferzeuger in stehender Bauweise mit besonders einfachen Mitteln und mit besonders geringem Fertigungs- und Montageaufwand herstellbar. Dabei kann insbesondere in den strömungsmediumsseitig nachgelagerten Dampferzeugerrohren der zweiten Verdampferheizfläche innerhalb jeder einzelnen Rohrreihe eine ungleichmäßige Verteilung des Strömungsmediums auf die Dampferzeugerrohre auftreten, die zu Temperaturschieflagen und durch unterschiedliche thermische Ausdehnung zu mechanischen Spannungen führt. Um Beschädigungen des Abhitzedampferzeugers zu vermeiden, wurden daher bisher beispielsweise Dehnbögen zur Kompensation dieser Spannungen angebracht. Diese Maßnahme kann jedoch bei einem Abhitzedampferzeuger in liegender Bauweise technisch vergleichsweise aufwändig sein.

Der Erfindung liegt daher die Aufgabe zugrunde, einen Durchlaufverdampfer für einen Abhitzedampferzeuger der oben genannten Art anzugeben, welcher bei einer besonders hohen Lebensdauer eine besonders einfache Bauweise erlaubt.

Diese Aufgabe wird erfindungsgemäß gelöst, indem den zweiten Dampferzeugerrohren strömungsmediumsseitig ein Blendensystem mit den weiteren Merkmalen aus dem unabhängigen Anspruch 1 nachgeschaltet ist.

Die Erfindung geht dabei von der Überlegung aus, dass eine besonders einfache Konstruktion des Abhitzedampferzeugers bzw. des Durchlaufverdampfers durch einen Entfall der bisher üblichen Dehnbögen erreicht werden könnte. Dabei müssen jedoch die durch Temperaturschieflagen in den parallel geschalteten Dampferzeugerrohren jeder einzelnen Rohrreihe verursachten mechanischen Spannungen auf andere Weise reduziert werden. Diese treten insbesondere in der zweiten Verdampferheizfläche auf, die mit Wasser-Dampf-Gemisch beaufschlagt wird. Die Temperaturschieflagen werden dabei durch unterschiedliche Anteile von Wasser und Dampf am strömungsseitigen Eintritt der Einzelrohre einer Rohrreihe und einer daraus resultierenden unterschiedlichen Durchströmung dieser Rohre verursacht. Es wurde erkannt, dass diese unterschiedliche Durchströmung in den Rohren durch einen im Vergleich zum geodätischen Druckverlust geringen Reibungsdruckverlust in den Dampferzeugerrohren verursacht wird. Eine Strömung mit hohem Dampfanteil des Strömungsmediums strömt nämlich bei geringem Reibungsdruckverlust vergleichsweise schnell durch einzelne Dampferzeugerrohre, während eine Strömung mit hohem Wasseranteil aufgrund ihres höheren, durch die Masse verursachten geodätischen Druckverlustes benachteiligt ist und zur Stagnation neigen kann. Um die Durchströmungen zu vergleichmäßigen, sollte daher der Reibungsdruckverlust erhöht werden. Dies ist erreichbar, indem den zweiten Dampferzeugerrohren strömungsmediumsseitig ein Blendensystem nachgeschaltet ist, welches einen derartigen zusätzlichen Reibungsdruckverlust verursacht.

Das Blendensystem umfasst eine Mehrzahl von in den einzelnen zweiten Dampferzeugerrohren angeordneten Blenden. Durch eine derartige dezentrale Anordnung der Blenden wird separat in jedem Dampferzeugerrohr gewährleistet, dass ein ausreichender zusätzlicher Reibungsdruckverlust entsteht, der für eine statische Stabilisierung der Strömung und somit für einen Ausgleich von Temperaturschieflagen sorgt.

Dieser Reibungsdruckverlust sollte anhand der übrigen Betriebsparameter wie der Rohrgeometrie, den Abmessungen des Heizgaskanals und der Temperaturverhältnisse entsprechend bestimmt werden. Vorteilhafterweise sollte dann die Blendenöffnung der jeweiligen Blende derart gewählt sein, dass sich über das Blendensystem der vorgegebene Reibungsdruckverlust des Strömungsmediums einstellt. Somit ist eine noch bessere Vermeidung von Temperaturschieflagen möglich.

Die jeweilige Blende weist eine Bohrung als Blendenöffnung mit einem Durchmesser zwischen 10 und 20 mm auf. Eine derartige Wahl führt nämlich zu einer besonders guten statischen Stabilisierung der Strömung in den zweiten Dampferzeugerrohren und somit zu einem besonders guten Ausgleich der Temperatur in parallel geschalteten Dampferzeugerrohren in den einzelnen Rohrreihen der zweiten Heizfläche.

Um eine noch flexiblere Gestaltung des Blendensystems zu ermöglichen, sollte es eine Mehrzahl von strömungsmediumsseitig hintereinander geschalteten Blenden umfassen. Dadurch kann eine noch gleichmäßigere Temperaturverteilung erzielt werden.

In vorteilhafter Ausgestaltung ist eine Anzahl von ersten Dampferzeugerrohren einander heizgasseitig als Rohrreihen hintereinander geschaltet. Dies ermöglicht es, eine größere Anzahl von parallel geschalteten Dampferzeugerrohren für eine Verdampferheizfläche zu verwenden, was durch die vergrößerte Oberfläche einen besseren Wärmeeintrag bedeutet. Allerdings sind die in Heizgasströmungsrichtung hintereinander angeordneten Dampferzeugerrohre dabei unterschiedlich beheizt. Insbesondere in den heizgaseintrittsseitigen Dampferzeugerrohren wird das Strömungsmedium vergleichsweise stark beheizt. Durch die beschriebene Nachschaltung eines Blendensystems kann jedoch auch in diesen Dampferzeugerrohren eine der Beheizung angepasste Durchströmung erreicht werden. Dadurch wird bei einfacher Konstruktion eine besonders lange Lebensdauer des Abhitzedampferzeugers erreicht.

In vorteilhafter Ausgestaltung ist die erste Verdampferheizfläche der zweiten Verdampferheizfläche heizgasseitig nachgeschaltet. Dies bietet den Vorteil, dass die zweite, strömungsmediumsseitig nachgeschaltete und somit zur weiteren Erhitzung bereits verdampften Strömungsmediums ausgelegte Verdampferheizfläche auch in einem vergleichsweise stärker beheizten Bereich des Heizgaskanals liegt.

Zweckmäßigerweise kommt ein derartiger Durchlaufverdampfer in einem Abhitzedampferzeuger zum Einsatz und es wird der Abhitzedampferzeuger in einer Gas- und Dampfturbinenanlage verwendet. Dabei ist der Dampferzeuger vorteilhafterweise heizgasseitig einer Gasturbine nachgeschaltet. Bei dieser Schaltung kann zweckmäßigerweise hinter der Gasturbine eine Zusatzfeuerung zur Erhöhung der Heizgastemperatur angeordnet sein.

Die mit der Erfindung erzielten Vorteile bestehen insbesondere darin, dass durch die Nachschaltung eines Blendensystems eine statische Stabilisierung der Strömung und somit eine Reduzierung der Temperaturdifferenzen zwischen parallel geschalteten zweiten Dampferzeugerrohren und der daraus resultierenden mechanischen Spannungen erreicht wird. Dadurch ist die Lebensdauer des Abhitzedampferzeugers besonders hoch. Durch die entsprechende Anordnung eines Blendensystems können weitere, aufwändige technische Maßnahmen wie Dehnbögen entfallen und es wird so gleichzeitig eine besonders einfache, kostensparende Konstruktion des Abhitzedampferzeugers bzw. eines Gas- und Dampfturbinenkraftwerks ermöglicht.

Ein Ausführungsbeispiel der Erfindung wird anhand einer Zeichnung näher erläutert. Darin zeigen:
- FIG 1: in vereinfachter Darstellung im Längsschnitt einen Dampferzeuger in liegender Bauweise,
- FIG 2: eine graphische Darstellung der Rohrtemperatur gegen den Dampfgehalt am Heizrohreintritt ohne Anordnung eines Blendensystems und
- FIG 3: eine graphische Darstellung der Rohrtemperatur gegen den Dampfgehalt am Heizrohreintritt mit Anordnung eines Blendensystems.

Gleiche Teile sind in allen Figuren mit denselben Bezugszeichen versehen.

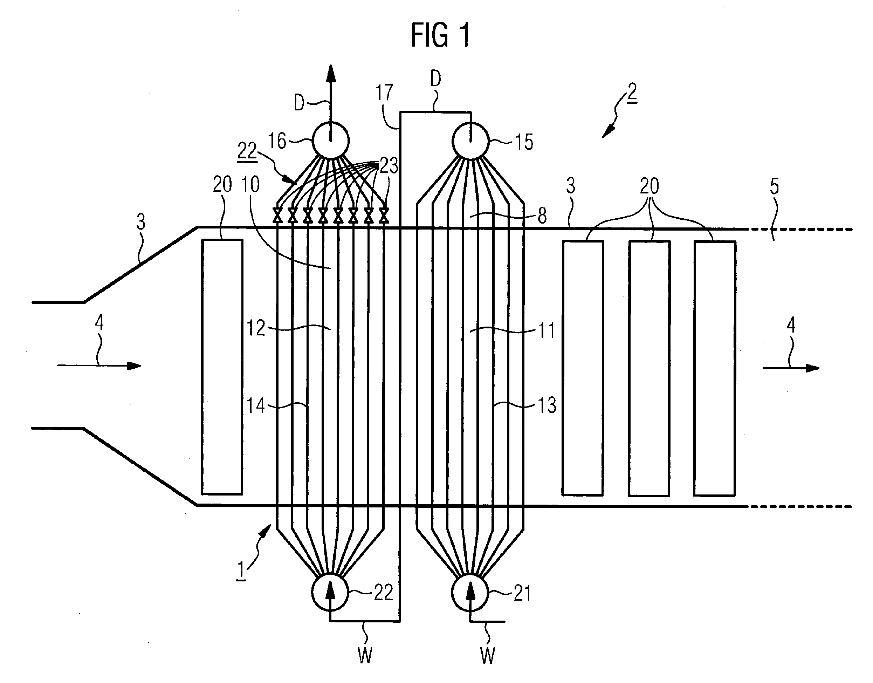

Der Durchlaufverdampfer 1 für den Abhitzedampferzeuger 2 gemäß der FIG 1 ist einer nicht näher dargestellten Gasturbine abgasseitig nachgeschaltet. Der Abhitzedampferzeuger 2 weist eine Umfassungswand 3 auf, die einen in einer annähernd horizontalen, durch die Pfeile 4 angedeuteten Heizgasrichtung durchströmbaren Heizgaskanal 5 für das Abgas aus der Gasturbine bildet. Im Heizgaskanal 5 ist eine Anzahl von nach dem Durchlaufprinzip ausgelegten Verdampferheizflächen 8, 10 angeordnet. Im Ausführungsbeispiel gemäß der FIG 1 sind jeweils zwei Verdampferheizflächen 8, 10 gezeigt, es kann aber auch eine größere Anzahl von Verdampferheizflächen vorgesehen sein.

Die Verdampferheizflächen 8, 10 gemäß der FIG 1 umfassen jeweils in der Art eines Rohrbündels eine Anzahl von in Heizgasrichtung hintereinander angeordneten Rohrreihen 11 bzw. 12. Jede Rohrreihe 11, 12 wiederum umfasst jeweils eine Anzahl von in Heizgasrichtung nebeneinander angeordneten Dampferzeugerrohren 13 bzw. 14, von denen für jede Rohrreihe 11, 12 nur jeweils eines sichtbar ist. Die annähernd vertikal angeordneten, zur Durchströmung eines Strömungsmediums W parallel geschalteten ersten Dampferzeugerrohre 13 der ersten Verdampferheizfläche 8 sind dabei ausgangsseitig an einen ihnen gemeinsamen Austrittssammler 15 angeschlossen. Die ebenfalls annähernd vertikal angeordneten, zur Durchströmung eines Strömungsmediums W parallel geschalteten zweiten Dampferzeugerrohre 14 der zweiten Verdampferheizfläche 10 sind ebenso ausgangsseitig an einen ihnen gemeinsamen Austrittssammler 16 angeschlossen. Es kann dabei auch bei beiden Verdampferheizflächen 8, 10 ein vergleichsweise aufwändigeres Sammlersystem vorgesehen sein. Die Dampferzeugerrohre 14 der zweiten Verdampferheizfläche 10 sind den Dampferzeugerrohren 13 der ersten Verdampferheizfläche 8 strömungstechnisch über ein Fallrohrsystem 17 nachgeschaltet.

Das aus den Verdampferheizflächen 8, 10 gebildete Verdampfersystem ist mit dem Strömungsmedium W beaufschlagbar, das bei einmaligem Durchlauf durch das Verdampfersystem verdampft und nach dem Austritt aus der zweiten Verdampferheizfläche 10 als Dampf D abgeführt wird. Das aus den Verdampferheizflächen 8, 10 gebildete Verdampfersystem ist in den nicht näher dargestellten Wasser-Dampf-Kreislauf einer Dampfturbine geschaltet. Zusätzlich zu dem die Verdampferheizflächen 8, 10 umfassenden Verdampfersystem sind in den Wasser-Dampf-Kreislauf der Dampfturbine eine Anzahl weitere, in der FIG 1 schematisch angedeutete Heizflächen 20 geschaltet. Bei den Heizflächen 20 kann es sich beispielsweise um Überhitzer, um Mitteldruckverdampfer, um Niederdruckverdampfer und/oder um Vorwärmer handeln.

Den zweiten Dampferzeugerrohren 14 ist nun ein Blendensystem 22 nachgeschaltet, welches in den einzelnen Dampferzeugerrohren angeordnete Blenden 23 umfasst. Die Bohrung der Blenden 23 ist so gewählt, dass der Reibungsdruckverlust des Strömungsmediums W in den Dampferzeugerrohren 14 entsprechend so hoch ist, dass eine gleichmäßige Durchströmung innerhalb einer Rohrreihe 11 gewährleistet ist. Dadurch werden Temperaturschieflagen reduziert. Die Blenden 23 umfassen dazu Bohrungen zwischen 10 und 20 mm Durchmesser.

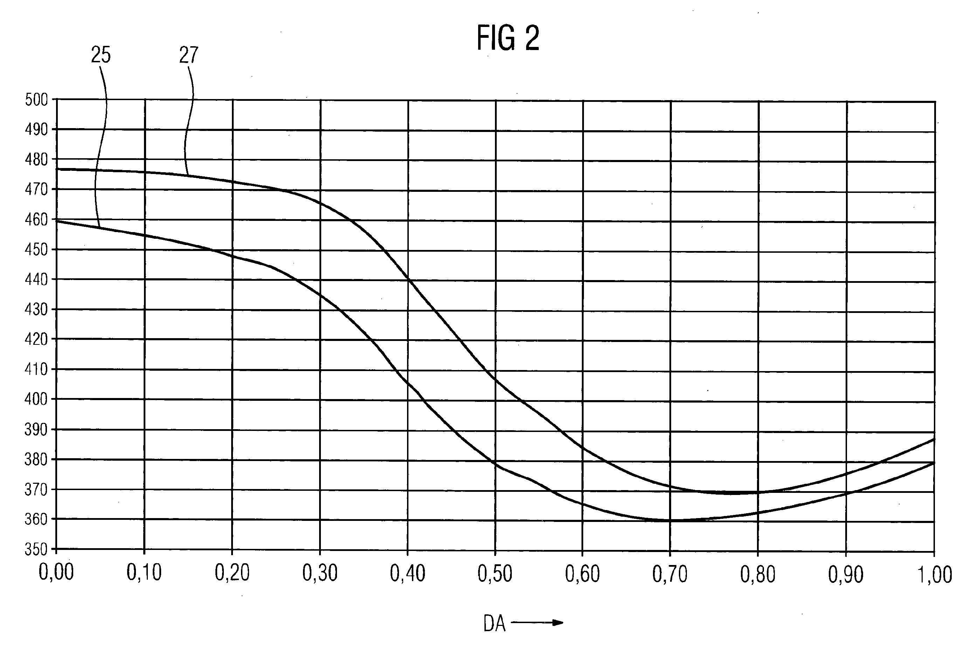

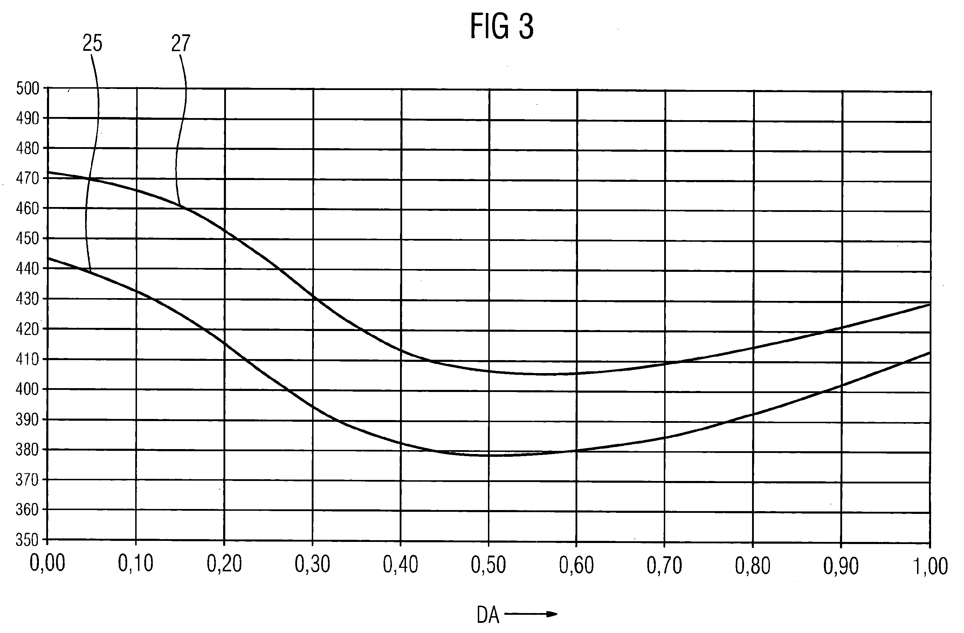

Der Effekt des Blendensystems 22 auf die Temperaturdifferenzen ist in den FIG 2 und 3 dargestellt. Sie zeigen jeweils eine graphische Darstellung der mittleren Rohrwandtemperatur 25 und der Rohraustrittswandtemperatur 27, aufgetragen gegen den Dampfanteil DA des Strömungsmediums. FIG 2 zeigt dabei die Situation ohne ein nachgeschaltetes Blendensystem 22. Hier variiert die mittlere Rohrwandtemperatur 25 zwischen ca. 460 °C und 360 °C, die Rohraustrittswandtemperatur 27 zwischen 480 °C und 370 °C, abhängig von Dampfgehalt DA. In FIG 3 ist gezeigt, dass sich diese Variationen auf ca. 440 °C bis 390 °C bzw. 470 °C bis 405 °C reduzieren. Die Temperaturdifferenzen von Rohren mit unterschiedlichem Dampfgehalt werden also deutlich reduziert.

Durch die Verringerung der Temperaturdifferenzen von Rohren mit unterschiedlichem Dampfgehalt am strömungsseitigen Eintritt wird die mechanische Spannungsbelastung des Abhitzedampferzeugers 2 reduziert und es ist eine besonders lange Lebensdauer bei gleichzeitig einfacher Bauweise durch Entfall der bisher üblichen Dehnbögen gewährleistet.

## Patentansprüche

1. Durchlaufverdampfer (1) für einen Abhitzedampferzeuger (2) in liegender Bauweise mit einer ersten Verdampferheizfläche (8), die eine Anzahl von im Wesentlichen vertikal angeordneten, von unten nach oben durchströmten ersten Dampferzeugerrohren (13) umfasst, und einer weiteren, der ersten Verdampferheizfläche (8) strömungsmediumsseitig nachgeschalteten zweiten Verdampferheizfläche (10), die eine Anzahl von weiteren, im Wesentlichen vertikal angeordneten, von unten nach oben durchströmten zweiten Dampferzeugerrohren (14) umfasst, **dadurch gekennzeichnet, dass** den zweiten Dampferzeugerrohren (14) strömungsmediumsseitig ein Blendensystem (22) nachgeschaltet ist, welches in den einzelnen Dampferzeugerrohren angeordnete Blenden (23) umfasst, wobei die jeweilige Blende (23) eine Bohrung als Blendenöffnung mit einem Durchmesser zwischen 10 und 20 mm aufweist.

2. Durchlaufverdampfer (1) nach Anspruch 1, bei dem die Blendenöffnung der jeweiligen Blende (23) derart gewählt ist, dass sich über das Blendensystem (22) ein vorgegebener Reibungsdruckverlust des Strömungsmediums einstellt.

3. Durchlaufverdampfer (1) nach einem Anspruch 1 oder 2, bei dem das Blendensystem (22) eine Mehrzahl von strömungsmediumsseitig hintereinander geschalteten Blenden (23) umfasst.

4. Durchlaufverdampfer (1) nach einem der Ansprüche 1 bis 3, bei dem eine Anzahl von zweiten Dampferzeugerrohren (14) als einander heizgasseitig als Rohrreihen (11) hintereinander geschaltet sind.

5. Durchlaufverdampfer (1) nach einem der Ansprüche 1 bis 4, bei dem die erste Verdampferheizfläche (8) der zweiten Verdampferheizfläche (10) heizgasseitig nachgeschaltet ist.

6. Abhitzedampferzeuger (2) mit einem Durchlaufverdampfer (1) nach einem der Ansprüche 1 bis 5.

7. Abhitzedampferzeuger (2) nach Anspruch 6, dem heizgasseitig eine Gasturbine vorgeschaltet ist.

## Claims

1. Once-through evaporator (1) for a horizontally constructed heat recovery steam generator (2) with a first evaporator heating surface (8) which incorporates a number of first steam generation tubes (13), the arrangement of which is essentially vertical and through which the flow is from the bottom to the top, and another second evaporator heating surface (10), which on the flow substance side is connected downstream from the first evaporator heating surface (8), which incorporates a further number of second steam generation tubes (14) the arrangement of which is essentially vertical and through which the flow is from the bottom to the top, **characterised in that** an aperture system (22) is connected downstream on the flow substance side from the second steam generation tubes (14) which comprises apertures (23) arranged in the individual steam generation tubes, wherein the respective aperture (23) has as the aperture opening a bore with a diameter between 10 and 20 mm.

2. Once-through evaporator (1) according to claim 1, in which the aperture opening of the respective aperture (23) is chosen in such a way that a prescribed frictional pressure loss for the flow substance is established via the aperture system (22).

3. Once-through evaporator (1) according to one of claims 1 or 2, in which the aperture system (22) incorporates a plurality of apertures (23) connected one after another on the flow substance side.

4. Once-through evaporator (1) according to one of claims 1 to 3, in which a number of second steam generation tubes (14) are connected one after another on the heating gas side as a tube series (11).

5. Once-through evaporator (1) according to one of claims 1 to 4, in which the first evaporator heating surface (8) is connected downstream from the second evaporator heating surface (10) on the heating gas side.

6. Heat recovery steam generator (2) with a once-through evaporator (1) as claimed in one of claims 1 to 5.

7. Heat recovery steam generator (2) according to claim 6, upstream from which on the heating gas side is connected a gas turbine.

## Revendications

1. Evaporateur (1) à passage continu pour un générateur (2) de vapeur à récupération de la chaleur perdue en mode de construction horizontale, comprenant une première surface (8) de chauffe d'évaporateur, qui comprend un certain nombre de premiers tubes (13) de générateur de vapeur sensiblement verticaux et parcourus de bas en haut, et une autre deuxième surface (10) de chauffe d'évaporateur, qui est montée en aval de la première surface (8) de chauffe d'évaporateur du côté du fluide en écoulement et qui comprend un certain nombre d'autres deuxièmes tubes (14) de générateur de vapeur sensiblement verticaux et parcourus de bas en haut, **caractérisé en ce qu'**en aval des deuxièmes tubes (14) de générateur de vapeur du côté du fluide en écoulement est monté un système (22) de diaphragmes, qui comprend des diaphragmes (23) montés dans les divers tubes du générateur de vapeur, chaque diaphragme (23) ayant un trou comme ouverture de diaphragme d'un diamètre compris entre 10 et 20 mm.

2. Evaporateur (1) à passage continu suivant la revendication 1, dans lequel l'ouverture de chaque diaphragme (23) est choisie de manière à établir par le système (22) de diaphragmes une perte de pression par frottement, donnée à l'avance, du fluide en écoulement.

3. Evaporateur (1) à passage continu suivant la revendication 1 ou 2, dans lequel le système (22) de diaphragmes comprend une multiplicité de diaphragmes (23) montés les uns derrière les autres du côté du fluide en écoulement.

4. Evaporateur (1) à passage continu suivant l'une des revendications 1 à 3, dans lequel un certain nombre de deuxièmes tubes (14) de générateur de vapeur sont montés les uns derrière les autres du côté du gaz chaud sous la forme de rangées (11) de tubes.

5. Evaporateur (1) à passage continu suivant l'une des revendications 1 à 4, dans lequel la première surface (8) de chauffe de l'évaporateur est montée en aval du côté du gaz chaud de la deuxième surface (10) de chauffe de l'évaporateur.

6. Générateur (2) de vapeur à récupération de la chaleur perdue, ayant un évaporateur (1) à passage continu suivant l'une des revendications 1 à 5.

7. Générateur (2) de vapeur à récupération de la chaleur perdue suivant la revendication 6, en amont duquel du côté du gaz chaud est monté une turbine à gaz.
